## Europäisches Patentamt
## European Patent Office
## Office européen des brevets

(19)

(11) Veröffentlichungsnummer: **0 027 596**
**B1**

(12) **EUROPÄISCHE PATENTSCHRIFT**

(45) Veröffentlichungstag der Patentschrift:
15.06.83

(51) Int. Cl.³: **H 04 M 1/27, H 04 M 1/30**

(21) Anmeldenummer: **80106095.5**

(22) Anmeldetag: **08.10.80**

(54) Schaltungsanordnung für eine Fernsprechteilnehmerstation.

(30) Priorität: **17.10.79 DE 2941928**

(43) Veröffentlichungstag der Anmeldung:
**29.04.81 Patentblatt 81/17**

(45) Bekanntmachung des Hinweises auf die Patenterteilung:
**15.06.83 Patentblatt 83/24**

(84) Benannte Vertragsstaaten:
**AT BE FR IT NL**

(56) Entgegenhaltungen:
**GB-A-492 514**
**BELL LABORATORIES RECORD, Band 51, Oktober 1973, Murray Hill, US S. KITSOPOULOS et al. »Experimental Telephone lets disabled »Dial« by voice«, Seiten 272—277**
**ABSTRACT OF NEW TECHNOLOGY FROM THE AIR FORCE SYSTEMS COMMAND, NTN-78/0334 »System understands what you say«**
**IEEE COMPUTER SOCIETY COMP COM 79, 26. Februar bis 1. März Long Beach, US Seiten 19—22**
**Elektronische Rechenanlagen, Heft 4, 1978, S. 178—186**

(73) Patentinhaber: **Telefonbau und Normalzeit GmbH, Mainzer Landstrasse 128-146 Postfach 4432, D-6000 Frankfurt (Main) (DE)**

(72) Erfinder: **Freese, Jens, Lerchesbergring 99, D-6000 Frankfurt (Main) (DE)**

## Schaltungsanordnung für eine Fernsprechteilnehmerstation

Die Erfindung betrifft eine Schaltungsanordnung für eine Fernsprechteilnehmerstation mit einer mit einem Mikrofon verbindbaren Spracherkennungs- und Auswerteeinrichtung, welche gesprochene, Ziffernwerte und Befehle kennzeichnende Worte in beispielsweise binäre Ziffernwerte oder Befehlsworte umsetzt und die Ziffernwerte einer Sendeinrichtung zur Aussendung von Wahlkennzeichen übergibt, worauf die Aussendung der Rufnummer aufgrund eines Befehlswortes selbsttätig auf die Anschlußleitung der Fernsprechteilnehmerstation erfolgt, wobei die Spracherkennungs- und Auswerteeinrichtung einen Speicher mit den charakteristischen Lautbildern der Ziffernwerte und der Befehlsworte aufweist und die Erkennung der gesprochenen Ziffernwerte und Befehle durch Vergleich der Lautbilder derselben mit den eingespeicherten Lautbildern erfolgt.

In der Druckschrift IEEE Computer Society, COMPCON 79, (26. Febr. bis 01. März 1979 in Long Beach, USA) digest of papers, Seiten 19 bis 22, wird ein Spracherkennungssystem zur Unterstützung von Schwerbehinderten beschrieben, bei welchem Befehle und Ziffernwerte aus den entsprechenden gesprochenen Worten ermittelt werden und mit Hilfe dieser Informationen eine Vielzahl von Einrichtungen steuerbar sind. Hierunter fällt auch eine Fernsprechteilnehmerstation, bei welcher die Ziffern einer auszusendenden Rufnummer durch das Spracherkennungssystem ermittelt und der Fernsprechteilnehmerstation übergeben werden.

Die Ermittlung eines Befehls oder eines Ziffernwertes erfolgt dadurch, daß die durch die Sprache erzeugten Lautbilder mit in einem gemeinsamen Speicher enthaltenen Lautbildern verglichen werden und bei Übereinstimmung der dem betreffenden eingespeicherten Lautbild zugeordnete Ziffernwert oder Befehl von der Spracherkennungseinrichtung ausgegeben wird. Zur Kontrolle für die Bedienungsperson weist die Spracherkennungseinrichtung eine alphanumerische Anzeigeeinrichtung auf, welche die Ziffernwerte in der eingegebenen Reihenfolge darstellt.

Die automatische Spracherkennung, d. h. die Analyse gesprochener Information und deren Umwandlungen beispielsweise in digitale Informationen, wobei z. B. das gesprochene Wort »eins« in ein Codewort mit der Bedeutung der Ziffer 1 umgewandelt werden, ist auch in der Druckschrift »Elektronische Rechenanlagen«, Heft 4, August 1978 auf den Seiten 178 bis 186 beschrieben.

In bestimmten Fällen, beispielsweise bei kostenintensiven Fernverbindungen ist bereits vorgeschlagen worden, die Benutzung der Wähleinrichtung (Wählscheibe, Wähltastatur) der Fernsprechteilnehmerstation auf autorisierte Personen, z. B. auf den Anschlußinhaber zu beschränken, in dem die Wähleinrichtung durch ein Schloß mechanisch oder elektrisch gesperrt wird.

Die Aufgabe der Erfindung besteht nun darin, eine Schaltungsanordnung anzugeben, welche die Benutzung bestimmter Nummern mittels der Wähleinrichtung einer mit einer Spracherkennungs- und Auswerteeinrichtung versehenen Fernsprechteilnehmerstation durch unbefugte Personen verhindert.

Diese Aufgabe wird dadurch gelöst, daß in der Spracherkennungs- und Auswerteeinrichtung zusätzlich zu den charakteristischen Lautbildern der Ziffernwerte die individuellen Lautbilder eines oder mehrerer Ziffernwerte, welche einer oder mehreren Personen zu eigen sind, eingespeichert sind, daß diese Lautbilder ebenfalls zum Vergleich herangezogen werden, und daß die Aussendung einer Rufnummer nur dann erfolgt, wenn das bzw. die individuellen Lautbilder eines oder mehrerer bestimmter Ziffernwerte an einer oder mehreren bestimmten Stellen der Rufnummer mit dem betreffenden Lautbild des gesprochenen Ziffernwertes übereinstimmen.

Eine Spracherkennungs- und Auswerteeinrichtung ist in der Regel so ausgelegt, daß sie in der Lage ist, die gesprochenen Ziffernwerte einer Vielzahl von Personen mit unterschiedlichen Stimmen zu analysieren. Werden nun die individuellen Lautbilder bestimmter Ziffernwerte von autorisierten Personen, beispielsweise des Anschlußinhabers zusätzlich eingespeichert und zusätzlich zum Vergleich herangezogen, dann ist auf diese Weise eine Verhinderung der Benutzung der Fernsprechteilnehmerstation durch nicht berechtigte Personen beispielsweise bei Ferngesprächen möglich.

Eine Weiterbildung der Erfindung besteht darin, daß die personenindividuellen Lautbilder in ziffernindividuellen programmierbaren Festwertspeichern enthalten sind. Dadurch ist es möglich, die Festwertspeicher der einzelnen Ziffern gesondert zu behandeln.

Eine Weiterbildung der Erfindung besteht auch darin, daß die Festwertspeicher steckbar sind. Durch die Austauschbarkeit können die Festwertspeicher außerhalb der Teilnehmerstation programmiert und anschließend in diese eingesetzt werden.

Weitere Vorteile ergeben sich aus den Unteransprüchen.

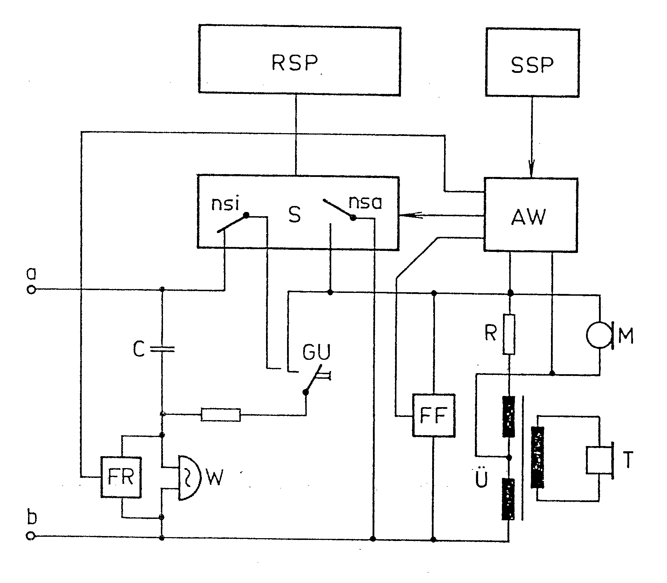

Die Erfindung wird anhand eines Ausführungsbeispiels näher erläutert, welches in der Zeichnung dargestellt ist.

Die Schaltungsanordnung in der Zeichnung zeigt nur die allernotwendigsten Einrichtungen einer Fernsprechteilnehmerstation. An die Sprachadern a und b ist über einen Kondensator C der Wecker W angeschlossen. Wird der Hausapparat abgehoben, so schließt der Gabelumschalter GU und stellt eine Schleifenverbindung zwischen den Sprechadern a und b her.

Damit ist das Mikrofon M mit den Sprechadern verbunden. Der Widerstand R dient als Leitungsnachbildung der Gabelschaltung, die aus dem Übertrager Ü gebildet wird. An einer Wicklung des Übertragers ist das Telefon (Hörer) angeschlossen. Zur Aussendung von Nummernschaltimpulsen dient die Sendeeinrichtung S. Die Erzeugung der Wahlimpulse erfolgt durch das rhythmische Öffnen des Kontakts nsi, wobei für die Dauer der Aussendung einer Serie von Wahlimpulsen jeweils der Kontakt nsa schließt und damit die Hör- und Sprecheinrichtung (M, T) kurzschließt. Schaltungsanordnungen dieser Art sind bekannt, wie beispielsweise aus der DE-OS 2 622 731 hervorgeht. An der Sendeeinrichtung S ist ein Rufnummernspeicher RSP angeschlossen, welcher eine Zahl von Rufnummern enthält, die durch jeweils eine Ziffer oder eine Ziffernkombination abrufbar sind.

Die Spracherkennungs- und Auswerteschaltung AW ist parallel zum Mikrofon M angeschlossen. Diese nimmt die an ihrem Eingang auftretenden Sprachsignale auf, analysiert sie und wertet sich aus. Dies kann beispielsweise dadurch geschehen, daß das in das Mikrofon M gesprochene Wort »1« nach der Verarbeitung am Ausgang der Spracherkennungs- und Auswerteschaltung AW in Form eines vier-Bit-Wortes mit entsprechender Bedeutung erscheint.

Wird nun der Handapparat abgenommen, so fließt über die zwischen den Sprechadern a und b verlaufende Schleife Speisestrom über das Mikrofon M. Die Schleifenbildung hat zur Folge, das in der Vermittlungsstelle eine Wahlaufnahmeeinrichtung angeschaltet wird, worauf das Wählzeichen zur betreffenden Fernsprechteilnehmerstation gesendet wird. Dieses Wählzeichen, welches mit einer konstanten Frequenz (beispielsweise 450 Hz) auf den Sprechadern erscheint, wird zweckmäßigerweise durch eine entsprechende Filteranordnung von der Auswertung der Sprachsignale ausgeschlossen. Der Teilnehmer hat nun die Möglichkeit, nacheinander die einzelnen Ziffern der zu wählenden Rufnummer in das Mikrofon einzugeben, worauf diese dann nach der Verarbeitung in der Spracherkennungs- und Auswerteschaltung AW der Sendeeinrichtung S übergeben werden. Das Ende der Wahlinformation kann beispielsweise durch ein bestimmtes Codewort markiert werden. Nach dem Codewort schaltet sich die Spracherkennungs- und Auswerteschaltung selbsttätig von dem Mikrofon M ab. Mit dem Empfang des die Endemarkierung kennzeichnenden Codewortes erhält die Sendeeinrichtung S ein entsprechendes Signal und beginnt mit der Aussendung der Wahlinformation.

Eine andere Möglichkeit kann darin bestehen, daß ein derartiges Codewort zur Kennzeichnung des Endes der Wahlinformation nicht verwendet wird und stattdessen nach einer bestimmten Sprachpause die Sendeeinrichtung S mit der Aussendung der Wahlinformation beginnt. Sobald auf den Sprechadern a und b das Freizeichen übermittelt wird, erkennt die Einrichtung FF das Ende der Wahlinformationsübermittlung und veranlaßt die Abschaltung der Spracherkennungs- und Auswerteschaltung AW. Die Einrichtung FF hat auch die Aufgabe, nach Ausbleiben des Schleifenstroms auf den Sprechadern a und b für einen bestimmten längeren Zeitraum, (einhängen), die Spracherkennungs- und Auswerteschaltung AW wieder an das Mikrofon M anzuschalten. Dies kann beispielsweise durch ein bistabiles Relais erfolgen.

Wird die betreffende Fernsprechteilnehmerstation angerufen, so wird die Spracherkennungs- und Asuwerteschaltung AW nicht benötigt. Zu diesem Zweck ist zwischen die Adern a und b eine Erkennungsschaltung FR für den Rufstrom geschaltet, welche bei Eintreffen desselben die Spracherkennungs- und Auswerteschaltung AW vom Mikrofon M abtrennt.

Zur Kontrolle der auszusendenden Rufnummer ist eine nicht gezeigte Anzeigeeinrichtung vorhanden, welche die von der Spracherkennungs- und Auswerteschaltung AW übergebenen Ziffern in der entsprechenden Reihenfolge darstellt.

Die Spracherkennungs- und Auswerteschaltung AW kann derart ausgelegt werden, daß sie in der Lage ist, die Ziffern von 1 bis 0 zu empfangen, zu analysieren und in einen Binärwert entsprechender Deutung umzusetzen, und zwar unabhängig von der jeweiligen Person, welche die zu den Ziffern entsprechenden Worte in das Mikrofon M spricht.

Die eigentlichen Lautbilder eines einer Ziffer entsprechenden Wortes sind jedoch von Person zu Person unterschiedlich. Wird nun ein derartiges Lautbild einer bestimmten Ziffer und einer bestimmten Person in dem Sprachspeicher SSP abgelegt, und wird das betreffende Lautbild mit den über das Mikrofon M der Spracherkennungs- und Auswerteschaltung AW zugeführten Lautbildern verglichen, so kann die Benutzung der betreffenden Fernsprechteilnehmerstation für bestimmte Verkehrsrichtungen auf eine Person beschränkt werden. Dies wird technisch dadurch gelöst, daß beispielsweise das Lautbild der Verkehrsausscheidungsziffer eingespeichert wird und das Auftreten dieser Verkehrsausscheidungsziffer als erste Stelle einer zu wählenden Rufnummer von der Übereinstimmung mit dem betreffenden Lautbild abhängig gemacht wird und nur dann die betreffende Rufnummer zur Aussendung gelangt, wenn das betreffende Lautbild mit dem eingespeicherten Lautbild übereinstimmt. Es ist auch denkbar, die Beschränkung auf andere Kennziffern oder Ziffernstellen der Rufnummer auszudehnen, ebenso können auch die Lautbilder mehrerer Personen eingespeichert sein, um die Benutzung der Fernsprechteilnehmerstation für bestimmte Verkehrsrichtungen einem größeren Personenkreis möglich zu machen. Weiterhin kann auf diese Weise auch die Benutzung der betreffenden Fernsprechteilnehmerstation auf eine bestimmte Person beschränkt werden, indem die betreffenden Lautbilder aller zehn Ziffern eingespeichert werden. Die charakteristischen Lautbilder werden zweckmäßigerweise in Festwertspeichern festgehalten, welche steckbar angeordnet sind. Bei den Festwertspeichern kann es sich dabei um programmierbare Festwertspeicher handeln, die in einem besonderen Gerät mit dem Lautbild einer Ziffer, die durch die betreffende Person gesprochen wird, geladen werden. Durch die Steckbarkeit der Festwertspeicher läßt sich eine derartige Fernsprechteilnehmerstation jederzeit neuen Bedürfnissen anpassen.

Zur Erhöhung des Bedienungskomforts kann die Sendeeinrichtung S auch mit einer nichtdargestellten Ziehwahleinrichtung kombiniert werden, wobei die Spracherkennungs- und Auswerteschaltung AW derart ausgestaltet ist, daß diese auch neben den Ziffern Worte verarbeiten kann. Die den einzelnen Zielen zugeordneten Rufnummern der Zielwahleinrichtung können nun durch die Spracherkennungs- und Auswerteschaltung AW bei Auftreten der dazugehörigen Worte abgerufen werden. Bei den Worten kann es sich beispielsweise um Codeworte oder auch die Namen der betreffenden Anschlußinhaber handeln.

**Patentansprüche**

1. Schaltungsanordnung für eine Fernsprechteilnehmerstation mit einer mit einem Mikrofon (M) verbindbaren Spracherkennungs- und Auswerteeinrichtung (AW), welche gesprochene, Ziffernwerte und Befehle kennzeichnende Worte in beispielsweise binäre Ziffernwerte oder Befehlsworte umsetzt und die Ziffernwerte einer Sendeeinrichtung zur Aussendung von Wahlkennzeichen (S) übergibt, worauf die Aussendung der Rufnummer aufgrund eines Befehlswortes selbsttätig auf die Anschlußleitung (a/b) der Fernsprechteilnehmerstation erfolgt, wobei die Spracherkennungs- und Auswerteinrichtung (AW) einen Speicher (SSP) mit den charakteristischen Lautbildern der Ziffernwerte und der Befehlsworte aufweist und die Erkennung der gesprochenen Ziffernwerte und Befehle durch Vergleich der Lautbilder derselben mit den eingespeicherten Lautbildern erfolgt, dadurch gekennzeichnet, daß in der Spracherkennungs- und Auswerteinrichtung (AW) zusätzlich zu den charakteristischen Lautbildern der Ziffernwerte die individuellen Lautbilder eines oder mehrerer Ziffernwerte, welche einer oder mehreren Personen zu eigen sind, eingespeichert sind, daß diese Lautbilder ebenfalls zum Vergleich herangezogen werden, und daß die Aussendung einer Rufnummer nur dann erfolgt, wenn das bzw. die individuellen Lautbilder eines oder mehrerer bestimmter Ziffernwerte an einer oder mehreren bestimmten Stellen der Rufnummer mit dem betreffenden Lautbild des gesprochenen Ziffernwertes übereinstimmen.

2. Schaltungsanordnung nach Anspruch 1, dadurch gekennzeichnet, daß die personenindividuellen Lautbilder in ziffernindividuellen programmierbaren Festwertspeichern enthalten sind.

3. Schaltungsanordnung nach einem der Ansprüche 1 oder 2, dadurch gekennzeichnet, daß die Festwertspeicher steckbar sind.

4. Schaltungsanordnung nach den Ansprüchen 1 bis 4, dadurch gekennzeichnet, daß an die Sprechadern eine Fühleinrichtung (FR) für den Rufstrom angeschlossen ist und bei Auftreten des Rufstroms diese die Spracherkennungs- und Auswerteschaltung (AW) vom Mikrofon (M) abtrennt und die Trennung mit dem Auflegen des Handapparates wieder aufgehoben wird.

5. Schaltungsanordnung nach einem der Ansprüche 1 bis 4, dadurch gekennzeichnet, daß an die Sprechadern (a/b) eine Fühleinrichtung (FF) für das Freizeichen angeschlossen ist und bei Auftreten des Freizeichens diese die Spracherkennungs- und Auswerteschaltung (AW) vom Mikrofon (M) abtrennt und die Trennung mit dem Auflegen des Handapparates aufgehoben wird.

6. Schaltungsanordnung nach einem der Ansprüche 1 bis 5, dadurch gekennzeichnet, daß durch die Spracheingabe eines bestimmten Codewortes, beispielsweise eines Namens eine bestimmte Rufnummer zur Aussendung kommt.

**Claims**

1. Circuit arrangement for a telephone apparatus having a speech recognition and evaluation unit (AW) connected with a microphone (M), which converts spoken words characterizing numerical values and commands for example in binary numerical values or command words and forwards the numerical values to a transmitter for dial pulses (S), where-upon a dial number is transmitted automatically in the terminal line (a/b) of the telephone apparatus triggerd by a command word, whereby the speech recognition and evaluation unit (AW) has a memory (SSP) with the characteristical sound pattern of the numerical values and the command words, and the recognition of the spoken numerical values and commands is performed by the comparison of the sound pattern of those with the stored sound pattern, characterized in, that in the speech recognition and evaluation unit (AW) the individnal sound pattern of one or serveral numerical values significant to one or several persons are stored additionally to the characteristical sound pattern, that these sound pattern are also used for comparison and that the transmission of a dial number is only performed, if the individual sound pattern of one or serveral digits of the dial number correspond with the concerning sound pattern of the spoken numerical value.

2. Circuit arrangement according to claim 1, characterized in, that the person-individual sound pattern are stored in digital-individual read-only memories.

3. Circuit arrangement according to one of claims 1 or 2, characterized in, that the read-only memories are pluggable.

4. Circuit arrangement according to one of claims 1 to 3, characterized in, that an indicator for ringing current (FR) is connected with the tip and ring wires and the indicator disconnects the speech recognition and evaluation unit (AW) from the microphone (M) in case of ringing current whereby the disconnection is cancelled in the on-hook condition.

5. Circuit arrangement according to one of claims 1 to 4 characterized in, that an indicator for ringing tone (FF) is connected with the trip and ring wires and the indicator disconnects the speech recognition and evaluation unit (AW) from the microphone (M) in case of ringing tone, whereby the disconnection is cancelled in the on-hook condition.

6. Circuit arrangement according to one of claims 1 to 5 characterized in, that the transmission of a distinct dial number is caused by the speech input of a distinct code word.


**Revendications**

1. Montage électronique pour un poste d'abonné téléphonique comportant un dispositif de reconnaissance vocale et d'exploitation (AW), connectable à un micro (M), qui convertit des mots parlés caractérisant des valeurs de chiffres et des ordres en valeurs de chiffres et mots d'ordre par exemple binaires et qui transmet les valeurs de chiffres à un dispositif d'émission (S) pour l'émission de codes de sélection, à la suite de quoi l'émission des numéros d'appel s'effectue automatiquement sur la base d'un mot d'ordre sur la ligne de raccordement (a/b) du poste d'abonné téléphonique, le dispositif de reconnaissance vocale et d'exploitation (AW) comportant une mémoire (SSP) avec les images sonores caractéristiques des valeurs de chiffres et des mots d'ordre, la reconnaissance des valeurs de chiffres et des ordres prononcés s'effectuant par comparaison de leurs images sonores avec les images sonores mémorisées, caractérisé en ce que les images sonores individuelles d'une ou plusieurs valeurs de chiffres, qui sont propres à une ou plusieurs personnes, sont mémorisées dans le dispositif de reconnaissance vocale et d'exploitation (AW) en plus des images sonores caractéristiques des valeurs de chiffres, en ce qu'il est fait également appel à ces images sonores pour la comparaison, et en ce que l'émission d'un numéro d'appel ne se produit que si l' (respectivement les) image sonore d'une ou plusieurs valeurs de chiffres déterminées du numéro d'appel coïncide avec l'image sonore concernée de la valeur de chiffre prononcée.

2. Montage électronique selon la revendication 1, caractérisé en ce que les images sonores propres aux personnes sont contenues dans des mémoires programmables propres aux chiffres.

3. Montage électronique selon l'une des revendications 1 ou 2, caractérisé en ce que les mémoires mortes sont enfichables.

4. Montage électronique selon les revendications 1 à 3, caractérisé en ce qu'un dispositif de détection (FR) du courant d'appel est connecté aux fils téléphoniques, celui-ci déconnectant, lors de l'apparition du courant d'appel, le circuit re reconnaissance vocale et d'exploitation (AW) du micro (M), et en ce que cette coupure est à nouveau supprimée lorsqu'on repose le combiné.

5. Montage électronique selon l'une des revendications 1 à 4, caractérisé en ce qu'un dispositif de détection (FF) de la tonalité est connecté aux files téléphoniques (a/b) celui-ci déconnectant le dispositif de reconnaissance vocale et d'exploitation (AW) du micro (M) lors de l'apparition de la tonalité, et en ce que cette coupure est supprimée lorsqu'on repose le combiné.

6. Montage électronique selon l'une des revendications 1 à 5, caractérisé en ce qu'un numéro d'appel déterminé aboutit à l'émission, à partir de l'entrée vocale, d'un mot de code déterminé, par exemple d'un nom.